# EUROPEAN PATENT APPLICATION

(11) **EP 1 920 968 A1**
(43) Date of publication of application: **14.05.2008**
(21) Application number: 06797563.1
(22) Date of filing: 30.08.2006
(51) Int. Cl.: B60L 3/00, B60W 10/26, B60W 20/00, H02P 5/74

(54) **ELECTRIC VEHICLE AND METHOD OF CONTROLLING THE SAME**

(30) Priority: 01.09.2005 JP 2005253474
(71) Applicant: TOYOTA JIDOSHA KABUSHIKI KAISHA, Toyota-shi, Aichi-ken, 471-8571 (JP)
(72) Inventor: OYOBE, Hichirosai, Toyota-shi, Aichi 471-8571 (JP); NAKAMURA, Makoto, Toyota-shi, Aichi 471-8571 (JP)
(74) Representative: TBK-Patent
(86) International application number: PCT/JP2006/317687
(87) International publication number: WO 2007/026947

(57) **Abstract**

When a control apparatus (60) determines, based on a signal IG, that an ignition key has been turned to the OFF position, the control apparatus (60) outputs to an actuator (103) an operation command of an informing apparatus (102) based on the SOC of a main battery (B). The informing apparatus (102) is disposed at a location where it can easily be seen by the driver when the driver has exited from the vehicle, and driven by the actuator (103). The informing apparatus (102) changes its projection amount from the external surface of the vehicle or an angle relative to the external surface of the vehicle based on the SOC of the main battery (B).

## Description

### Technical Field

The present invention relates to an electric-powered vehicle, and particularly, to an electric-powered vehicle such as an electric vehicle or a hybrid vehicle incorporating as a motive power source a battery that can be charged and discharged.

### Background Art

In recent years, electric-powered vehicles such as electric vehicles or hybrid vehicles are receiving widespread attention as environmentally friendly vehicles. An electric vehicle uses an electric power storage apparatus (battery), an inverter, and an electric motor (motor) driven by the inverter as its motive power source. A hybrid vehicle uses, in addition to a conventional engine, a battery, an inverter and a motor driven by the inverter as its motive power source.

In such an electric vehicle or hybrid vehicle incorporating a battery as a source of energy, it is necessary for the driver to grasp the state of charge (SOC) of the battery.

Japanese Patent Laying-Open No. 7-87607 discloses a charge display apparatus for an electric vehicle with which the state of charge can be checked at the outside of the vehicle. The charge display apparatus includes display means arranged near a charging connector on the external surface of the vehicle body for displaying the SOC of a battery. With the charge display apparatus, the SOC of the battery can easily be checked while performing the charging work, at the location where the charging work is performed Accordingly, it is not necessary for the driver to check the same by sitting on the driver's seat and looking at the instrumental panel or the like.

However, the charge display apparatus disclosed in Japanese Patent Laying-Open No. 7-87607 is for checking the SOC of the battery while performing the charging work, at the location where the charging work is performed. Therefore, if the driver forgets to charge the battery in the first place when he exits the vehicle despite the lowered SOC of the battery, the charging work itself will not be performed. As a result, such a problem occurs that the next traveling becomes impossible.

### Disclosure of the Invention

The present invention has been made to solve such a problem, and an object thereof is to provide an electric-powered vehicle that can effectively inform a user about lowering of the SOC of a battery.

According to the present invention, an electric-powered vehicle includes: a first motive power apparatus of which energy source is electric power; an electric power storage apparatus supplying electric power to the first motive power apparatus; an information portion provided at the exterior of the vehicle for informing a vehicle user about necessity of charging the electric power storage apparatus; and a control portion outputting an operation command to the information portion based on a state of charge (SOC) of the electric power storage apparatus, when a system of the vehicle is stopped.

In the electric-powered vehicle according to the present invention, an operation command is output from the control portion to the information portion provided at the exterior of the vehicle based on the SOC of the electric power storage apparatus, when the system of the vehicle is stopped. Then, the information portion operates. By the operations of the information portion provided at the exterior of the vehicle, the user of the vehicle after exiting the vehicle can easily recognize at the outside of the vehicle the necessity of charging the electric power storage apparatus.

Therefore, with the electric-powered vehicle according to the present invention, it is possible to effectively inform the vehicle user about lowering of the SOC of the electric power storage apparatus. As a result, the vehicle user can be prevented from forgetting to charge the electric power storage apparatus despite the lowered SOC of the electric power storage apparatus.

According to the present invention, an electric-powered vehicle includes: a first motive power apparatus of which energy source is electric power; an electric power storage apparatus supplying electric power to the first motive power apparatus; an information portion provided at the exterior of the vehicle; an exit determination portion determining whether or not a driver has exited from the vehicle; and a control portion outputting an operation command to the information portion based on a state of charge of the electric power storage apparatus, when a system of the vehicle is stopped and the exit determination portion determines that the driver has exited from the vehicle.

In the electric-powered vehicle according to the present invention, an operation command is output from the control portion to the information portion provided at the exterior of the vehicle based on the SOC of the electric power storage apparatus, when the system of the vehicle is stopped and the exit determination portion determines that the driver has exited from the vehicle. Then, the information portion operates. By the operation of the information portion provided at the exterior of the vehicle, the user of the vehicle exiting from the vehicle can easily recognize the necessity of charging the electric power storage apparatus.

Therefore, with the electric-powered vehicle according to the present invention, it is possible to more surely and effectively inform the vehicle user about lowering of the SOC of the electric power storage apparatus. As a result, the vehicle user can more surely be prevented from forgetting to charge the electric power storage apparatus despite the lowered SOC of the electric power storage apparatus.

Preferably, the information portion is configured to change its position in accordance with the operation command from the control portion. The control portion outputs to the information portion the operation command that varies in accordance with the state of charge of the electric power storage apparatus.

With the electric-powered vehicle, since the information portion changes its position in accordance with the operation command that varies in accordance with the SOC of the electric power storage apparatus, the vehicle user can easily recognize the necessity of charging the electric power storage apparatus and also can easily check the SOC of the electric power storage apparatus.

Preferably, when the state of charge of the electric power storage apparatus becomes not greater than a prescribed value, the control portion outputs to the information portion the operation command that is different than when the state of charge of the electric power storage apparatus is greater than the prescribed value. The information portion informs the vehicle user by an information pattern that is different between when the state of charge of the electric power storage apparatus is not greater than the prescribed value and when it is greater than the prescribed value, based on the operation command from the control portion.

With the electric-powered vehicle, since the information portion informs the vehicle user by an information pattern that is different between when the SOC of the electric power storage apparatus is not greater than the prescribed value and when it is greater than the prescribed value, the vehicle user can easily determine at a glance the necessity of charging the electric power storage apparatus.

Preferably, the control portion outputs the operation command to the information portion, when the state of charge of the electric power storage apparatus becomes not greater than a prescribed value.

With the electric-powered vehicle, since the information portion operates when the SOC of the electric power storage apparatus becomes not greater than a prescribed value, the vehicle user can easily determine at a glance the necessity of charging the electric power storage apparatus.

Preferably, the electric-powered vehicle further includes a vehicle position detection portion detecting whether or not the electric-powered vehicle is parked at a location where charging equipment is installed. The control portion outputs the operation command to the information portion, when the vehicle position detection portion detects that the electric-powered vehicle is parked at the location where the charging equipment is installed.

With the electric-powered vehicle, since the operation command is output from the control portion to the information portion only when the vehicle position detection portion detects that the electric-powered vehicle is parked at the location where the charging equipment is installed, the information portion will not unnecessarily operate at a location without charging equipment where charging is impossible. Therefore, with the electric-powered vehicle, unnecessary power consumption can be prevented.

Preferably, the electric-powered vehicle further includes a second motive power apparatus of which energy source is fuel. The control portion outputs the operation command to the information portion based on the state of charge of the electric power storage apparatus and a remaining amount of the fuel.

In the present electric-powered vehicle that can travel if the fuel of the second motive power apparatus remains despite the lowered SOC of the electric power storage apparatus, the operation command is output from the control portion to the information portion based on the SOC of the electric power storage apparatus and the remaining amount of the fuel. Hence, such a situation can be prevented that the information portion operates even though the vehicle is capable of traveling by the second motive power apparatus. Therefore, with the electric-powered vehicle, an unnecessary operation of the information portion can be prevented.

Preferably, the information portion is configured to change its position in accordance with the operation command from the control portion. The control portion outputs to the information portion an operation command that varies in accordance with the SOC of the electric power storage apparatus and the remaining amount of the fuel.

With the present electric-powered vehicle, since the information portion changes its position in accordance with the operation command that varies in accordance with the SOC of the electric power storage apparatus and the remaining amount of the fuel, the vehicle user can easily check the total energy remaining amount of the electric power storage apparatus and the fuel.

Preferably, when the state of charge of the electric power storage apparatus becomes not greater than a first prescribed value and the remaining amount of the fuel becomes not greater than a second prescribed value, the control portion outputs to the information portion the operation command that is different than when at least one of the state of charge of the electric power storage apparatus and the remaining amount of the fuel is greater than the respective corresponding first and second prescribed values. The information portion informs the vehicle user by an information pattern that is different between when the state of charge of the electric power storage apparatus is not greater than the first prescribed value with the remaining amount of the fuel being not greater than the second prescribed value, and when at least one of the state of charge of the electric power storage apparatus and the remaining amount of the fuel is greater than the respective corresponding first and second prescribed values, based on the operation command from the control portion.

With the electric-powered vehicle, since the information portion informs the vehicle user by the information pattern that is different between when the total energy remaining amount of the electric power storage apparatus and the fuel is lowered and when it is not, the vehicle user can easily determine at a glance the necessity of charging the electric power storage apparatus or supplying the fuel.

Preferably, the control portion outputs the operation command to the information portion, when the state of charge of the electric power storage apparatus becomes not greater than a third prescribed value and the remaining amount of the fuel becomes not greater than a fourth prescribed value.

With the electric-powered vehicle, since the information portion operates when the total energy remaining amount of the electric power storage apparatus and the fuel is lowered, the vehicle user can easily determine at a glance the necessity of charging the electric power storage apparatus or supplying the fuel.

Preferably, the electric-powered vehicle further includes a vehicle position detection portion detecting whether or not the electric-powered vehicle is parked at a location where charging equipment is installed. The control portion outputs the operation command to the information portion, if the remaining amount of the fuel is not greater than a fifth prescribed value when the vehicle position detection portion detects that the electric-powered vehicle is parked at the location where the charging equipment is installed.

With the electric-powered vehicle, since the operation command is output from the control portion to the information portion only if the remaining amount of the fuel is lowered when the vehicle position detection portion detects that the electric-powered vehicle is parked at the location where the charging equipment is installed, the information portion will not operate unnecessarily, such as at a location without charging equipment where charging is impossible or when the vehicle can travel using fuel. Therefore, with the electric-powered vehicle, unnecessary power consumption can be prevented.

Preferably, the electric-powered vehicle further includes: an electric power generation apparatus generating electric power using an output from the second motive power apparatus; and an electric power input portion receiving electric power provided from a source outside the vehicle for charging the electric power storage apparatus. The first motive power apparatus includes a first rotating electric machine. The second motive power apparatus includes an internal combustion engine. The electric power generation apparatus includes a second rotating electric machine having its rotation shaft mechanically linked to a crankshaft of the internal combustion engine. The electric-powered vehicle further includes: first and second inverters provided respectively corresponding to the first and second rotating electric machines; and an inverter control portion controlling the first and second inverters. The first and second rotating electric machines respectively include first and second three-phase coils as stator coils. The electric power input portion includes a first terminal connected to a neutral point of the first three-phase coil, and a second terminal connected to a neutral point of the second three-phase coil. The inverter control portion controls the first and second inverters so that AC power provided across the first and second terminals is converted into DC power and provided to the electric power storage apparatus.

In the present electric-powered vehicle, charging from a source outside the vehicle to the electric power storage apparatus is realized by using the first and second rotating electric machines, the first and second inverters provided respectively corresponding to them, and the inverter control portion. Therefore, with the present electric-powered vehicle, it is not necessary to include a separate charging converter, and reduction in the size of the vehicle as well as an improvement in the fuel efficiency owing to the reduction in the weight of the vehicle can be realized.

As above, according to the present invention, the vehicle user can easily recognize at the outside of the vehicle the necessity of charging the electric power storage apparatus, by the operation of the information portion provided at the exterior of the vehicle. Accordingly, the user is effectively informed about lowering of the SOC of the electric power storage apparatus. As a result, the vehicle user can be prevented from forgetting to charge the electric power storage apparatus despite the lowered SOC of the electric power storage apparatus.

### Brief Description of the Drawings

Fig. 1 is a schematic block diagram of a hybrid vehicle shown as an exemplary electric-powered vehicle according to a first embodiment of the present invention.
Fig. 2 shows a manner of an informing apparatus shown in Fig. 1 changing its position.
Fig. 3 shows another manner of the informing apparatus shown in Fig. 1 changing its position.
Fig. 4 is a flowchart showing control of the informing apparatus by a control apparatus shown in Fig. 1.
Fig. 5 is a circuit diagram of the powertrain of a hybrid vehicle shown in Fig. 1.
Fig. 6 is a functional block diagram of a control apparatus shown in Fig. 5.
Fig. 7 is a functional block diagram of a converter control portion shown in Fig. 6.
Fig. 8 is a functional block diagram of first and second inverter control portions shown in Fig. 6.
Fig. 9 shows the simplified circuit diagram of Fig. 5 focusing on the portion related to charging.
Fig. 10 shows a control state of transistors in the charging mode.
Fig. 11 is a flowchart showing a control structure of a program related to determination of starting charging by the control apparatus shown in Fig. 5.
Fig. 12 is another flowchart showing the control of the informing apparatus by the control apparatus shown in Fig. 1.
Fig. 13 is another flowchart showing the control of the informing apparatus by the control apparatus shown in Fig. 1.
Fig. 14 is a schematic block diagram of a hybrid vehicle shown as one exemplary electric-powered vehicle according to a second embodiment of the present invention.
Fig. 15 is a flowchart showing the control of an informing apparatus by a control apparatus shown in Fig. 14.
Fig. 16 is a schematic block diagram of a hybrid vehicle shown as one exemplary electric-powered vehicle according to a third embodiment of the present invention.
Fig. 17 is a schematic block diagram of a hybrid vehicle shown as one exemplary electric-powered vehicle according to a fourth embodiment of the present invention.

### Best Modes for Carrying Out the Invention

In the following, embodiments of the present invention are described in detail referring to the drawings. In the drawings, the same or corresponding portions are denoted by the same character, and description thereof will not be repeated.

### First Embodiment

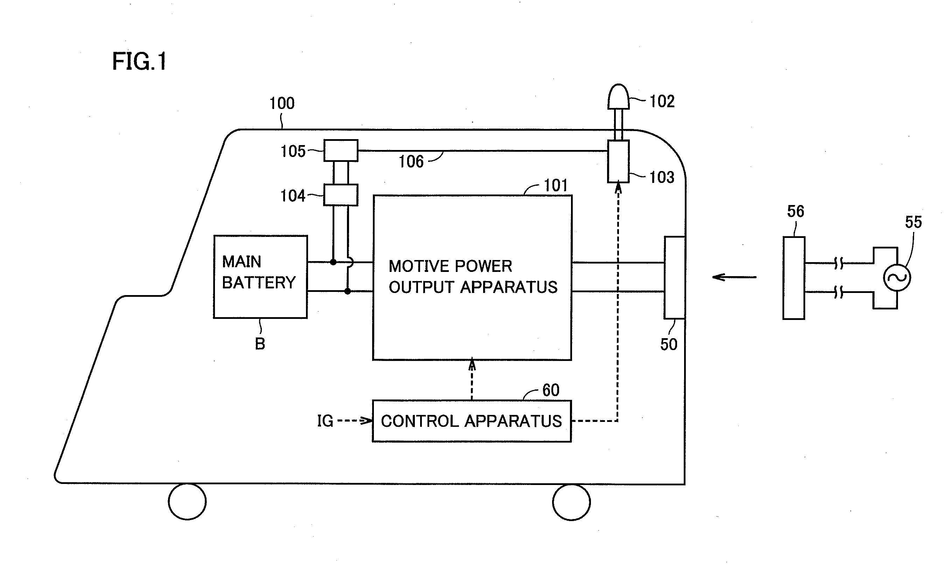

Fig. 1 is a schematic block diagram of a hybrid vehicle shown as an exemplary electric-powered vehicle according to a first embodiment of the present invention. Referring to Fig. 1, a hybrid vehicle 100 includes a main battery B, a motive power output apparatus 101, an informing apparatus 102, an actuator 103, a DC/DC converter 104, an auxiliary equipment battery 105, a power supply line 106, a connector 50, and a control apparatus 60.

Main battery B is a direct current (DC) power supply that can be charged and discharged, and configured with a secondary battery such as a nickel-hydride battery, a lithium-ion battery or the like, for example. Main battery B supplies DC power to motive power output apparatus 101 and DC/DC converter 104. Main battery B is charged by a DC voltage output from motive power output apparatus 101. A capacitor of large capacitance can be used as main battery B.

Motive power output apparatus 101 includes an engine and a motor-generator (both not shown, hereinafter the same applies) as its motive power source, and generates the driving force of hybrid vehicle 100 based on a command received from control apparatus 60. Based on a command received from control apparatus 60, motive power output apparatus 101 converts alternate current (AC) power that is from a commercial power supply 55 located outside the vehicle and that is received at a connector 50 into DC power, and outputs the converted DC power to main battery B.

Connector 50 is a terminal for receiving AC power from commercial power supply 55 located outside the vehicle. When main battery B is charged using commercial power supply 55 located outside the vehicle, charging plug 56 is connected to connector 50, and AC power from commercial power supply 55 is provided to connector 50.

Informing apparatus 102 is an apparatus provided at the exterior of the vehicle for informing the vehicle user outside the vehicle about the necessity of charging main battery B. That is, even if the SOC of main battery B is displayed on the console panel in the vehicle, the vehicle user may exit from the vehicle without checking the console panel, and forget to charge main battery B. In this case, the next traveling may be impossible if the SOC of main battery B is low. Accordingly, even in such a case where the vehicle user exit from the vehicle without checking the SOC of main battery B on the console panel, informing apparatus 102 disposed at a location where it can easily be seen outside the vehicle by the vehicle user allows the vehicle user to easily recognize the necessity of charging main battery B.

Informing apparatus 102 is driven by actuator 103, and changes its position based on the SOC of main battery B as will be described later. Actuator 103 drives informing apparatus 102 based on a command from control apparatus 60. Actuator 103 is configured with, for example, a small electric motor, and supplied with electric power from auxiliary equipment battery 105 via power supply line 106 to operate.

DC/DC converter 104 reduces the voltage of DC power supplied from main battery B to a voltage for auxiliary equipment, and supplies the DC power of reduced voltage to auxiliary equipment battery 105. Auxiliary equipment battery 105 is a battery that can be charged and discharged, and configured with, for example, a lead battery. Auxiliary equipment battery 105 is charged by DC/DC converter 104. Auxiliary equipment battery 105 supplies the electric power for operation to actuator 103 and other auxiliary equipment (not shown).

Control apparatus 60 exerts control for allowing motive power output apparatus 101 to generate driving force, by a method that will be described later. Control apparatus 60 also exerts control for allowing motive power output apparatus 101 to convert AC power received at connector 50 from commercial power supply 55 into DC power and to output the same to main battery B, by a method that will be described later.

Furthermore, control apparatus 60 receives a signal IG from a not-shown ignition key (or an ignition switch, hereinafter the same applies). When control apparatus 60 determines, based on the received signal IG, that the ignition key has been turned to the OFF position, control apparatus 60 outputs to actuator 103 an operation command of informing apparatus 102 based on the SOC of main battery B, by a method that will be described later.

The ignition key being at the OFF position corresponds to "stop of the vehicle system" in the present invention.

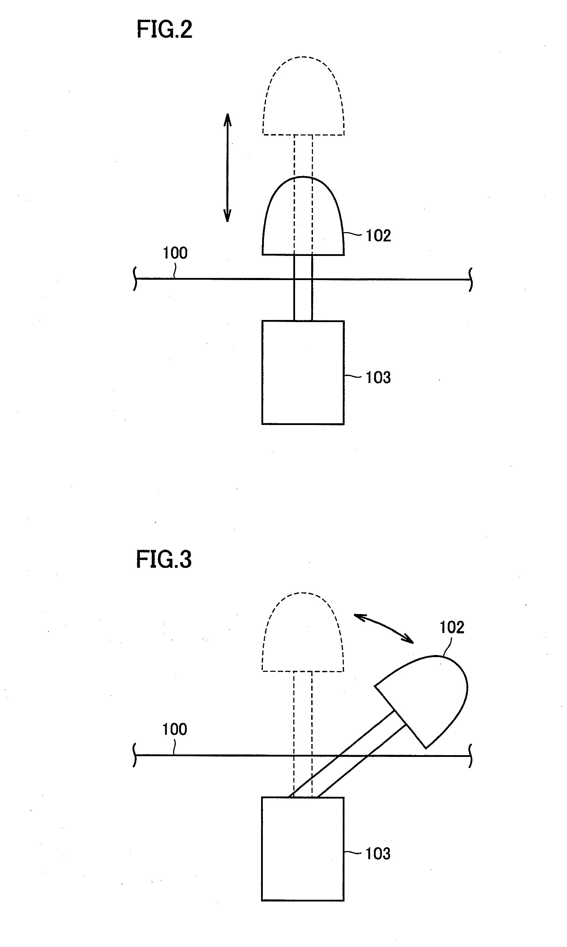

Fig. 2 shows a manner of informing apparatus 102 shown in Fig. 1 changing its position. Referring to Fig. 2, the projection amount of informing apparatus 102 from the external surface of the vehicle changes based on whether or not the SOC of main battery B is smaller than a reference value representing lowering of SOC of main battery B. That is, when the SOC of main battery B is not greater than the reference value, the projection amount is small as indicated by the solid line. When the SOC of main battery B is greater than the reference value, the projection amount is greater as indicated by the dashed line.

Conversely, the projection amount can be greater when the SOC of main battery B is not greater than the reference value so as to attract the vehicle user's attention, and the projection amount can be smaller when the SOC of main battery B is greater than the reference value. Also, the projection amount of informing apparatus 102 can be varied in accordance with the SOC of main battery B.

Fig. 3 shows another manner of informing apparatus 102 shown in Fig. 1 changing its position. Referring to Fig. 3, the angle of informing apparatus 102 relative to the external surface of the vehicle changes based on whether or not the SOC of main battery B is smaller than the reference value representing lowering of SOC of main battery B. That is, when the SOC of main battery B is not greater than the reference value, informing apparatus 102 tilts as indicated by the solid line. When the SOC of main battery B is greater than the reference value, informing apparatus 102 is upright as indicated by the dashed line.

Conversely, informing apparatus 102 can be upright when the SOC of main battery B is not greater than the reference value, and it can tilt when the SOC of main battery B is greater than the reference value. Also, the tilt amount of informing apparatus 102 may be varied in accordance with the SOC of main battery B.

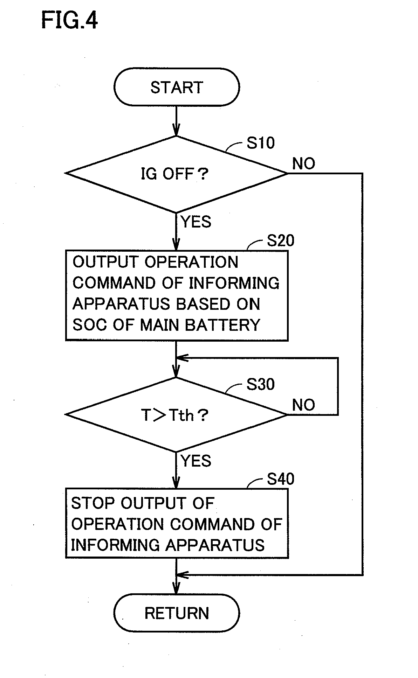

Fig. 4 is a flowchart showing the control of informing apparatus 102 by control apparatus 60 shown in Fig. 1. The process shown in this flowchart is called from the main routine and executed, at regular time intervals or every time a prescribed condition is satisfied.

Referring to Fig. 4, control apparatus 60 determines, based on signal IG from the ignition key, whether or not the ignition key has been turned to the OFF position (step S10). When control apparatus 60 determines that the ignition key has not been turned to the OFF position (NO in step S10), it ends the series of operations.

When it is determined that the ignition key has been turned to the OFF position in step S10 (YES in step S10), based on the SOC of main battery B, control apparatus 60 outputs to actuator 103 an operation command of informing apparatus 102 (step S20). Specifically, it may output different operation commands based on whether or not the SOC of main battery B is smaller than the reference value representing lowering of the SOC of main battery B, or it may output different operation commands in accordance with the SOC of main battery B.

Outputting the operation command to actuator 103, control apparatus 60 counts time T, and determines whether or not time T has exceeded a preset threshold value Tth (step S30). When control apparatus 60 determines that time T has exceeded threshold value Tth (YES in step S30), it stops the output of the operation command of informing apparatus 102 (step S40). The purpose of stopping the operation of informing apparatus 102 after the prescribed time has elapsed is to prevent exhaustion of auxiliary battery 105, since informing apparatus 102 operates by using electric power for auxiliary equipment from auxiliary equipment battery 105 after the ignition key is turned OFF and the vehicle system is stopped. Then, stopping the output of the operation command of informing apparatus 102, control apparatus 60 ends the series of operations.

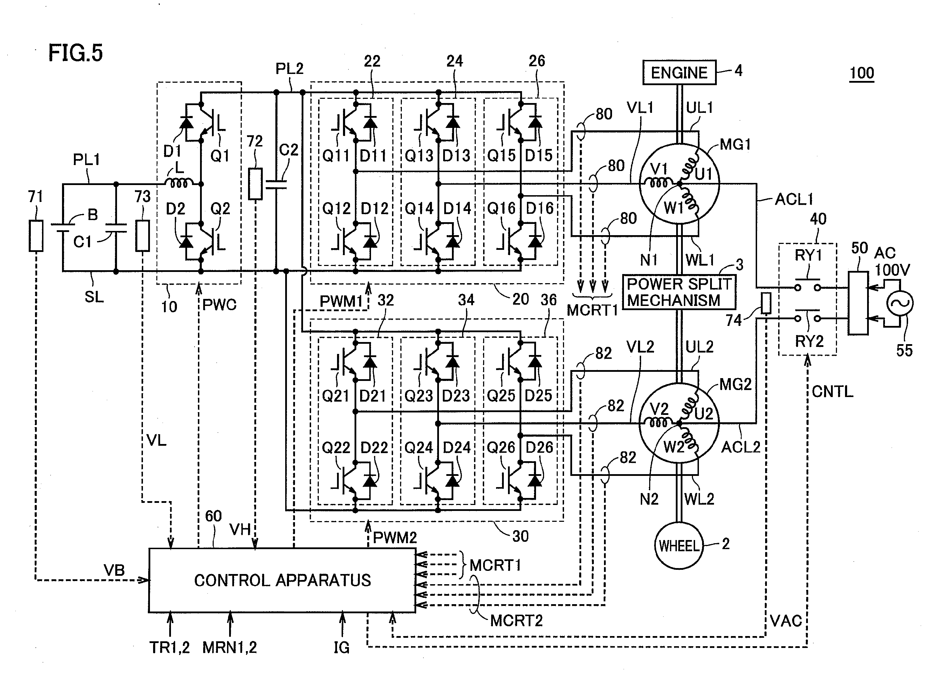

Fig. 5 is a circuit diagram of the powertrain of hybrid vehicle 100 shown in Fig. 1. Referring to Fig. 5, hybrid vehicle 100 includes main battery B, a boost converter 10, inverters 20, 30, power supply line PL1, PL2, an earth line SL, U-phase lines UL1, UL2, V-phase lines VL1, VL2, W-phase lines WL1, WL2, motor-generators MG1, MG2, an engine 4, a power split mechanism 3, and wheels 2. In this circuit diagram, the portions except for main battery B, connector 50 and control apparatus 60 correspond to motive power output apparatus 101 shown in Fig. 1. In Fig. 5, DC/DC converter 104 and auxiliary equipment battery 105 are not shown.

Power split mechanism 3 is a mechanism linked to engine 4 and motor-generators MG1, MG2 for distributing motive power among them. For example, as the power split mechanism, a planetary gear mechanism having three rotation shafts of a sun gear, a planetary carrier, and a ring gear can be used. These three rotation shafts are connected to the rotation shafts of engine 4, and motor-generators MG1, MG2, respectively. For example, by inserting the crankshaft of engine 4 through the center of a hollow rotor of motor-generator MG1, engine 4 and motor-generators MG1, MG2 can mechanically be connected to power split mechanism 3.

Motor-generator MG2 has its rotation shaft linked to wheels 2 by not-shown reduction gear, differential gear and the like. A speed reducer to the rotation shaft of motor-generator MG2 can further be incorporated inside power split mechanism 3.

Motor-generator MG1 is incorporated in hybrid vehicle 100 as an element that operates as a generator driven by engine 4 and that operates as an electric motor that can start engine 4. Motor-generator MG2 is incorporated in hybrid vehicle 100 as an electric motor that drives wheels 2 that are the driving wheels.

Motor-generators MG1, MG2 are, for example, three-phase AC synchronous motors. Motor-generator MG1 includes, as a stator coil, a three-phase coil formed with U-phase coil U1, V-phase coil V1 and W-phase coil W1. Motor-generator MG2 includes, as a stator coil, a three-phase coil formed with U-phase coil U2, V-phase coil V2 and W-phase coil W2.

Motor-generator MG1 uses the output of engine 4 to generate a three-phase AC voltage, and outputs the generated three-phase AC voltage to inverter 20. Motor-generator MG1 generates drive force by the three-phase AC voltage received from inverter 20, and starts engine 4.

Motor-generator MG2 generates drive torque of the vehicle by three-phase AC voltage received from inverter 30. In regenerative braking mode of the vehicle, motor-generator MG2 generates three-phase AC voltage and outputs the same to inverter 30.

Boost converter 10 includes a reactor L, npn transistors Q1, Q2 and diodes D1, D2. Reactor L has one end connected to power supply line PL1 and the other end connected to a connection point between npn transistors Q1, Q2. Npn transistors Q1, Q2 are connected in series between power supply line PL2 and earth line SL and receives at their base a signal PWC from control apparatus 60. Diodes D1, D2 for passing current from the emitter side to the collector side are respectively connected between collectors and emitters of npn transistors Q 1, Q2.

As the aforementioned npn transistors and as npn transistors described in the following, for example IGBTs (Insulated Gate Bipolar Transistors) can be used. Also, in place of npn transistors, electric power switching elements such as power MOSFETs (Metal Oxide Semiconductor Field-Effect Transistors) can be used.

Inverter 20 includes a U-phase arm 22, a V-phase arm 24 and a W-phase arm 26. U-phase arm 22, V-phase arm 24 and W-phase arm 26 are provided in parallel between power supply line PL2 and earth line SL.

U-phase arm 22 includes npn transistors Q11, Q12 connected in series. V-phase arm 24 includes npn transistors Q13, Q14 connected in series. W-phase arm 26 includes npn transistors Q 15, Q 16 connected in series. Diodes D11-D16 for passing current from the emitter side to the collector side are respectively connected between collectors and emitters of npn transistors Q11-Q16. Connection points ofnpn transistors in respective phase arms are respectively connected to respective ends, not being neutral point N1, of the U, W, and W-phase coils of motor-generator MG1, via U, V, and W-phase lines UL1, VL1, WL1.

Inverter 30 includes a U-phase arm 32, a V-phase arm 34 and a W-phase arm 36. U-phase arm 32, V-phase arm 34 and W-phase arm 36 are provided in parallel between power supply line PL2 and earth line SL.

U-phase arm 32 includes npn transistors Q21, Q22 connected in series. V-phase arm 34 includes npn transistors Q23, Q24 connected in series. W-phase arm 36 includes npn transistors Q25, Q26 connected in series. Diodes D21-D26 for passing current from the emitter side to the collector side are respectively connected between collectors and emitters of npn transistors Q21-Q26. In inverter 30 also, connection points in respective phase arms are respectively connected to respective ends, not being neutral point N2, of the U, W, and W-phase coils of motor-generator MG2, via U, V, W-phase lines UL2, VL2, WL2.

Hybrid vehicle 100 further includes capacitors C1, C2, a relay circuit 40, a connector 50, a control apparatus 60, AC lines ACL1, ACL2, voltage sensors 71-74, and current sensors 80, 82.

Capacitor C1 is connected between power supply line PL1 and earth line SL, and reduces the effect of voltage fluctuation to main battery B and boost converter 10. A voltage VL between power supply line PL1 and earth line SL is measured by voltage sensor 73.

Capacitor C2 is connected between power supply line PL2 and earth line SL, and reduces the effect of voltage fluctuation to inverters 20, 30 and boost converter 10. A voltage VH between power supply line PL2 and earth line SL is measured by voltage sensor 72.

Boost converter 10 boosts a DC voltage supplied from main battery B via power supply line PL1 and supplies the result to power supply line PL2. More specifically, based on signal PWC from control apparatus 60, boost converter 10 stores the current that flows in accordance with the switching operation of npn transistor Q2 as magnetic field energy in reactor L. Then, boost converter 10 discharges the stored energy by passing current to power supply line PL2 via diode D1, synchronizing with the timing where npn transistor Q2 is turned OFF. In this manner, boost converter 10 performs the voltage boost operation.

In addition, based on signal PWC from control apparatus 60, boost converter 10 reduces a DC voltage received from one of or both of inverters 20 and 30 via power supply line PL2 to the voltage level of main battery B, and charges main battery B.

Based on signal PWM1 from control apparatus 60, inverter 20 converts a DC voltage supplied from power supply line PL2 into a three-phase AC voltage and drives motor-generator MG1.

Thus, motor-generator MG1 is driven to generate torque specified by a torque command value TR1. Based on signal PWM1 from control apparatus 60, inverter 20 converts the three-phase AC voltage, having been generated by motor-generator MG1 receiving the output of engine 4, into a DC voltage, and outputs the converted DC voltage to power supply line PL2.

Based on signal PWM2 from control apparatus 60, inverter 30 converts a DC voltage supplied from power supply line PL2 into a three-phase AC voltage and drives motor-generator MG2.

Thus, motor-generator MG2 is driven to generate torque specified by a torque command value TR2. Based on signal PWM2 from control apparatus 60, inverter 30 converts the three-phase AC voltage, having been generated by motor-generator MG2 receiving the rotation force of the drive shaft in the regenerative braking mode of hybrid vehicle 100, into a DC voltage, and outputs the converted DC voltage to power supply line PL2.

It is to be noted that, the "regenerative braking" used herein includes breaking involving regeneration when a foot brake operation is performed by the driver of hybrid vehicle 100, or deceleration (or stopping of acceleration) of the vehicle with regeneration by turning-off of an accelerator pedal during driving rather than by the operation of the foot brake.

Relay circuit 40 includes relays RY1, RY2. As relays RY1, RY2, mechanical contact relays can be used, for example. Semiconductor relays can also be used. Relay RY1 is provided between AC line ACL1 and connector 50, and turned ON/OFF based on signal CNTL form control apparatus 60. Relay RY2 is provided between AC line ACL2 and connector 50, and turned ON/OFF based on signal CNTL form control apparatus 60.

Relay circuit 40 performs connection/disconnection between AC lines ACL1, ACL2 and connector 50, in response to a signal CNTL from control apparatus 60. That is, when relay circuit 40 receives signal CNTL of H (logic high) level from control apparatus 60, relay circuit 40 electrically connects AC lines ACL1, ACL2 to connector 50. When it receives signal CNTL of L (logic low) level from control apparatus 60, relay circuit 40 electrically disconnects AC lines ACL1, ACL2 from connector 50.

Connector 50 includes not-shown first and second terminals for receiving AC power from an external commercial power supply 55. The first and second terminals are respectively connected to relays RY1, RY2 of relay circuit 40. The voltage VAC between AC lines ACL1 and ACL2 is measured by voltage sensor 74, and the measured value is transmitted to control apparatus 60.

Voltage sensor 71 detects a battery voltage VB of main battery B, and outputs detected battery voltage VB to control apparatus 60. Voltage sensor 73 detects a voltage between both ends of capacitor C1, that is, an input voltage VL to boost converter 10, and outputs detected voltage VL to control apparatus 60. Voltage sensor 72 detects a voltage between both ends of capacitor C2, that is, an output voltage VH (corresponding to the input voltage of inverters 20, 30, hereinafter the same applies) from boost converter 10, and outputs detected voltage VH to control apparatus 60.

Current sensor 80 detects motor current MCRT 1 passing through motor-generator MG1, and outputs detected motor current MCRT1 to control apparatus 60. Current sensor 82 detects motor current MCRT2 passing through motor-generator MG2, and outputs detected motor current MCRT2 to control apparatus 60.

Based on torque command values TR1, TR2 and motor rotation speeds MRN1, MRN2 of motor-generators MG1, MG2 output from an externally provided ECU (Electronic Control Unit), voltage VL from voltage sensor 73, and voltage VH from voltage sensor 72, control apparatus 60 generates signal PWC for driving boost converter 10, and outputs generated signal PWC to boost converter 10.

Additionally, based on voltage VH and motor current MCRT1 and torque command value TR1 of motor-generator MG1, control apparatus 60 generates signal PWM1 for driving motor-generator MG1, and outputs generated signal PWM1 to inverter 20. Furthermore, based on voltage VH and motor current MCRT2 and torque command value TR2 of motor-generator MG2, control apparatus 60 generates signal PWM2 for driving motor-generator MG2, and outputs generated signal PWM2 to inverter 30.

Here, based on signal IG from the ignition key and the SOC of main battery B, control apparatus 60 generates signals PWM1, PWM2 for controlling inverters 20, 30 so that AC power from commercial power supply 55 provided across neutral points N1, N2 of motor-generators MG1, MG2 is converted into DC power and main battery B is charged with the same.

Furthermore, control apparatus 60 determines, based on the SOC of main battery B, whether or not charging from a source outside the vehicle is possible. When control apparatus 60 determines that charging is possible, it outputs signal CNTL of H level to relay circuit 40. On the other hand, when control apparatus 60 determines that main battery B is almost fully charged and charging is not possible, it outputs signal CNTL of L level to relay circuit 40. When signal IG indicates a stop state, control apparatus 60 stops inverters 20 and 30.

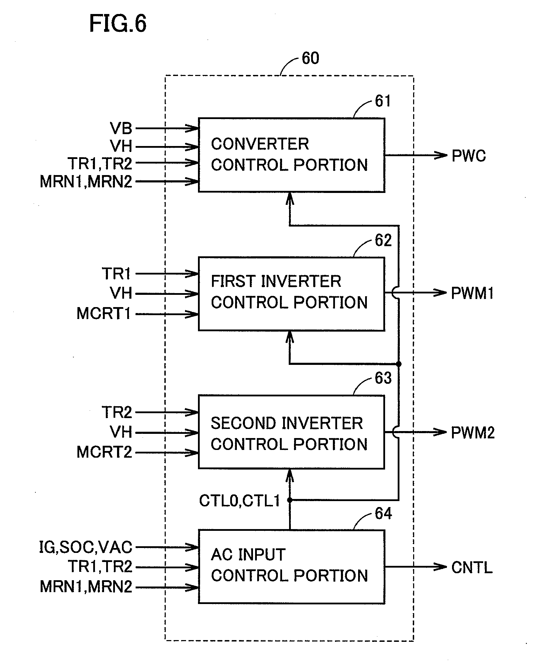

Fig. 6 is a functional block diagram of control apparatus 60 shown in Fig. 5. Referring to Fig. 6, control apparatus 60 includes a converter control portion 61, a first inverter control portion 62, a second inverter control portion 63, and an AC input control portion 64. Converter control portion 61 generates, based on battery voltage VB, voltage VH, torque command values TR1, TR2, and motor rotation speeds MRN1, MRN2, signal PWC for turning ON/OFF npn transistors Q1, Q2 of boost converter 10, and outputs generated signal PWC to boost converter 10.

First inverter control portion 62 generates, based on torque command value TR1 and motor current MCRT1 of motor-generator MG1 and voltage VH, signal PWM1 for turning ON/OFF npn transistors Q11-Q16 of inverter 20, and outputs generated signal PWM1 to inverter 20.

Second inverter control portion 63 generates, based on torque command value TR2 and motor current MCRT2 of motor-generator MG2 and voltage VH, signal PWM2 for turning ON/OFF npn transistors Q21-Q26 of inverter 30, and outputs generated signal PWM2 to inverter 30.

AC input control portion 64 determines the drive state of motor-generators MG1, MG2 based on torque command values TR1, TR2 and motor rotation speeds MRN1, MRN2. In accordance with signal IG and the SOC of main battery B, AC input control portion 64 cooperatively controls two inverters and converts an externally supplied AC voltage into a DC voltage and boosts the same, and charges main battery B.

Here, signal IG of H level is a signal meaning that hybrid vehicle 100 is activated. Signal IG of L level is a signal meaning that hybrid vehicle 100 is stopped.

When the drive state of motor-generators MG1, MG2 is the stop state and signal IG also indicates that hybrid vehicle 100 is stopped, AC input control portion 64 permits a charging operation if the SOC of main battery B is lower than a prescribed level. Specifically, AC input control portion 64 brings relays RY1, RY 2 into conduction by signal CNTL. If there is any input of voltage VAC, AC input control portion 64 generates control signal CTL1 in accordance therewith. AC input control portion 64 cooperatively controls inverters 20, 30 to convert an externally supplied AC voltage into a DC voltage and boost the same, and permits charging of main battery B.

On the other hand, when the motor-generators MG1, MG2 is in the driving state or signal IG indicates that hybrid vehicle 100 is driven, and when the SOC of main battery B is higher than a prescribed level, AC input control portion 64 does not permit a charging operation. Specifically, AC input control portion 64 opens relays RY1, RY2 by signal CNTL. AC input control portion 64 generates control signal CTL0 and causes boost converter 10 and inverters 20, 30 to perform the normal operation of the vehicle driving mode.

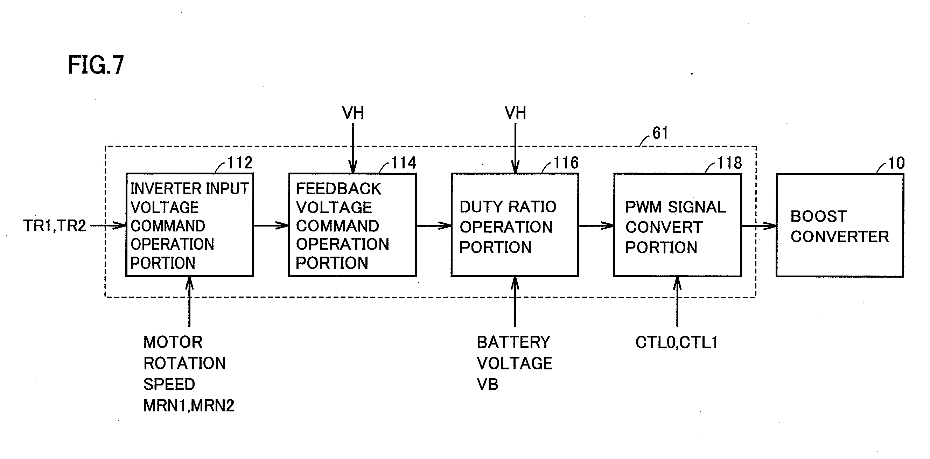

Fig. 7 is a functional block diagram of converter control portion 61 shown in Fig. 6. Referring to Fig. 7, converter control portion 61 includes an inverter input voltage command operation portion 112, a feedback voltage command operation portion 114, a duty ratio operation portion 116, and a PWM signal convert portion 118.

Based on torque commands TR1, TR2 and motor rotation speeds MRN1, MRN2, inverter input voltage command operation portion 112 performs an operation to obtain an optimum value (target value) of the inverter input voltage, that is, voltage command VH_com, and outputs obtained voltage command VH_com to feedback voltage command operation portion 114.

Based on output voltage VH of boost converter 10 detected by voltage sensor 72 and voltage command VH_com from inverter input voltage command operation portion 112, feedback voltage command operation portion 114 performs an operation to obtain feedback voltage command VH_com_fb for controlling output voltage VH to voltage command VH_com, and outputs obtained feedback voltage command VH_com_fb to duty ratio operation portion 116.

Based on battery voltage VB from voltage sensor 71 and feedback voltage command VH_com_fb from feedback voltage command operation portion 114, duty ratio operation portion 116 performs an operation to obtain a duty ratio for controlling output voltage VH of boost converter 10 to voltage command VH_com, and outputs the obtained duty ratio to PWM signal convert portion 118.

Based on the duty ratio received from duty ratio operation portion 116, PWM signal convert portion 118 generates a PWM (Pulse Width Modulation) signal for turning ON/OFF npn transistors Q1, Q2 of boost converter 10, and outputs the generated PWM signal as signal PWC to npn transistors Q1, Q2 of boost converter 10.

By increasing the ON duty of npn transistor Q2 of the lower arm of boost converter 10, the electric power storage in reactor L can be increased, and therefore an output of higher voltage can be obtained. On the other hand, by increasing the ON duty of npn transistor Q1 of the upper arm, the voltage of power supply line PL2 is reduced. Accordingly, by controlling the duty ratio of npn transistors Q1, Q2, the voltage of power supply line PL2 can be controlled to any voltage equal to or greater than the output voltage of main battery B.

Furthermore, when control signal CTL1 is activated, PWM signal convert portion 118 brings npn transistor Q 1 into conduction and npn transistor Q2 out of conduction irrespective of the output of duty ratio operation portion 116. Thus, charging current can be passed from power supply line PL2 to power supply line PL1.

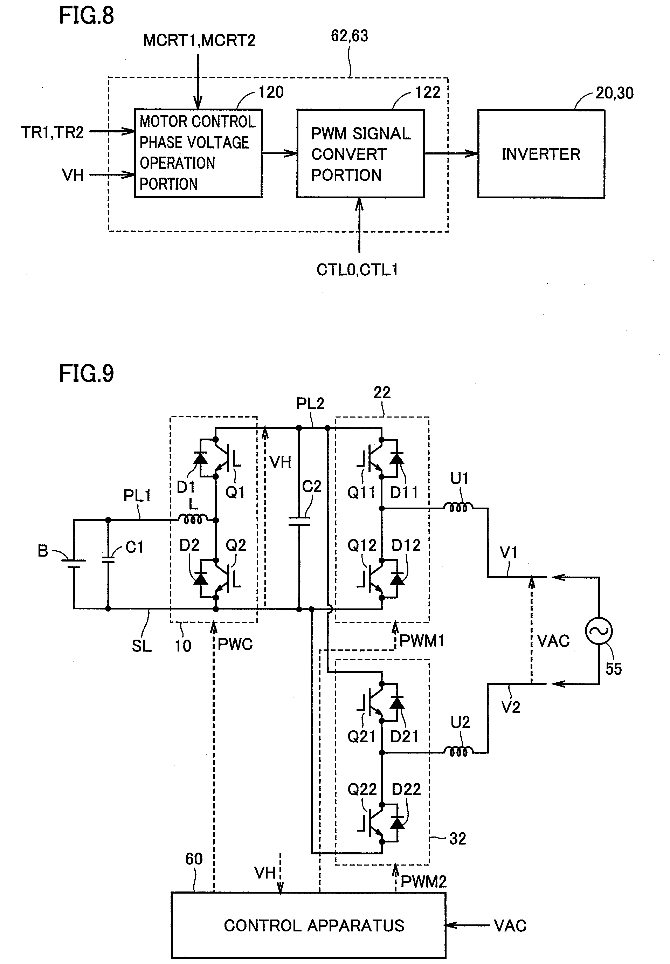

Fig. 8 is a functional block diagram of first and second inverter control portions 62, 63 shown in Fig. 6. Referring to Fig. 8, first and second inverter control portions 62, 63 each include motor control phase voltage operation portion 120 and PWM signal convert portion 122.

Motor control phase voltage operation portion 120 receives input voltage VH of inverters 20, 30 from voltage sensor 72. Motor control phase voltage operation portion 120 receives motor current MCRT1 (or MCRT2) passing through each phase of motor-generator MG1 (or MG2) from current sensor 80 (or 82). Motor control phase voltage operation portion 120 receives torque command value TR1 (or TR2) from ECU. Then, based on these input values, motor control phase voltage operation portion 120 performs an operation to obtain a voltage to be applied to each phase coil of motor-generator MG1 (or MG2), and outputs the obtained each phase coil voltage to PWM signal convert portion 122.

When PWM signal convert portion 122 receives control signal CTL0 from AC input control portion 64, based on each phase coil voltage command received from motor control phase voltage operation portion 120, PWM signal convert portion 122 generates signal PWM1_0 (one type of signal PWM1) (or PWM2_0 (one type of signal PWM2)) for actually turning ON/OFF npn transistors Q11-Q16 (or Q21-Q26) of inverter 20 (or 30), and outputs generated signal PWM1_0 (or PWM2_0) to npn transistors Q11-Q16 (or Q21-Q26) of inverter 20 (or 3 0).

Thus, npn transistors Q11-Q16 (or Q21-Q26) are switching-controlled, and the current passing through each phase of motor-generator MG1 (or MG2) is controlled so that motor-generator MG1 (or MG2) outputs the specified torque. As a result, motor torque according to torque command value TR1 (or TR2) is output.

Additionally, when PWM signal convert portion 122 receives control signal CTL1 from AC input control portion 64, irrespective of the output of motor control phase voltage operation portion 120, PWM signal convert portion 122 generates signal PWM1_1 (one type of signal PWM1) (or PWM2_1(one type of signal PWM2)) for turning ON/OFF npn transistors Q11-Q16 (or Q21-Q26) so that AC current of the same phase is passed through each ofU-phase arm 22 (or 32), V-phase arm 24 (or 34), and W-phase arm 26 (or 36) of inverter 20 (or 30), and outputs generated signal PWM 1_1 (or PWM 2_1) to npn transistors Q11-Q16 (or Q21-Q26) of inverter 20 (or 30).

When AC current of the same phase passes through each of U, V, W-phase coils, rotation torque is not generated in motor-generators MG1, MG2. By the cooperative control of inverters 20 and 30, AC voltage VAC is converted into a DC charging voltage.

Next, a method of generating a DC charging voltage from commercial power supply 55 (having a voltage level of AC voltage VAC) located outside the vehicle in hybrid vehicle 100 is described.

Fig. 9 shows the simplified circuit diagram of Fig. 5 focusing on the portion related to charging. In Fig. 9, the U-phase arms in inverters 20 and 30 are representatively shown. Similarly, the U-phase coils of the three-phase coils of the motor-generators are representatively shown. The U-phase is representatively described, since the circuits of the other two phases passing current of the same phase perform similarly as in the U-phase. As can be seen from Fig. 9, the set of U-phase coil U1 and U-phase arm 22, and the set of U-phase coil U2 and U-phase arm 32 are each configured similarly to boost converter 10. Accordingly, they are capable of not only converting an AC voltage of, for example, 100V into a DC voltage, but also further boosting the voltage to be converted into a battery charging voltage of, for example, about 200V.

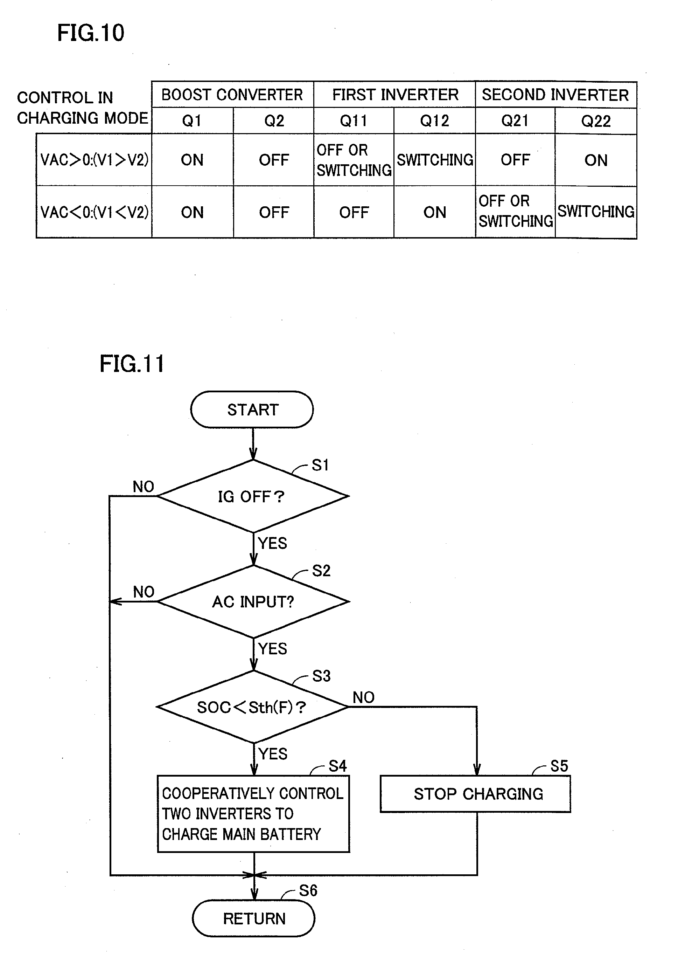

Fig. 10 shows a control state of transistors in the charging mode. Referring to Figs. 9 and 10, when voltage VAC > 0, that is, when voltage V1 of line ACL1 is higher than voltage V2 of line ACL2, transistor Q1 of the boost converter is brought into the ON state while transistor Q2 is brought into the OFF state. Thus, boost converter 10 becomes capable of passing charging current from power supply line PL2 to power supply line PL1.

In the first inverter, transistor Q12 is switched in the cycle and duty ratio in accordance with voltage VAC, and transistor Q 11 is controlled to be in the OFF state or to be in a switched state where it is brought into conduction synchronizing with the conduction of diode D11. Here, in the second inverter, transistor Q21 is brought into the OFF state, while transistor Q22 is controlled to be in the ON state.

When voltage VAC > 0, in the ON state of transistor Q12, current passes through the route of coil U1 → transistor Q12 → diode D22 → coil U2. Here, the energy stored in coils U1, U2 is discharged when transistor Q12 is brought into the OFF state, and current passes through power supply line PL2 via diode D 11. In order to reduce the loss by diode D1 1, transistor Q11 may be brought into conduction synchronizing with the conduction period of diode D11. Based on the values of voltage VAC and voltage VH, a boost ratio is obtained, and switching cycle and duty ratio of transistor Q12 are determined.

Next, when voltage VAC < 0, that is, when voltage V1 of line ACL1 is lower than voltage V2 of line ACL2, transistor Q1 of the boost converter is brought into the ON state and transistor Q2 is brought into the OFF state. Thus, boost converter 10 becomes capable of passing charging current from power supply line PL2 to power supply line PL1.

In the second inverter, transistor Q22 is switched in the cycle and duty ratio in accordance with voltage VAC, and transistor Q21 is controlled to be in the OFF state or to be in a switched state where it is brought into conduction synchronizing with the conduction of diode D21. Here, in the first inverter, transistor Q11 is brought into the OFF state, while transistor Q12 is controlled to be in the ON state.

When voltage VAC < 0, in the ON state of transistor Q22, current passes through the route of coil U2 → transistor Q22 → diode D12 → coil U1. Here, the energy stored in coils U1, U2 is discharged when transistor Q22 is brought into the OFF state, and current passes through power supply line PL2 via diode D21. In order to reduce the loss by diode D21, transistor Q21 may be brought into conduction synchronizing with the conduction period of diode D21. In this case also, based on the values of voltage VAC and voltage VH, a boost ratio is obtained, and switching cycle and duty ratio of transistor Q22 are determined.

Fig. 11 is a flowchart showing the control structure of the program related to determination of starting charging by control apparatus 60 shown in Fig. 5. The process shown in this flowchart is called from the main routine and executed, at regular time intervals or every time a prescribed condition is satisfied.

Referring to Fig. 11, control apparatus 60 determines, based on signal IG from the ignition key, whether or not the ignition key has been turned to the OFF position (step S1). When control apparatus 60 determines that the ignition key has not been turned to the OFF position (NO in step S1), it is inappropriate to perform charging by connecting the charging cable to the vehicle, and therefore the process proceeds to step S6 where the control moves to the main routine.

When it is determined that the ignition key has been turned to the OFF position (YES in step S1), it is determined to be appropriate to perform charging, and therefore the process proceeds to step S2. In step S2, relays RY1 and RY2 are controlled from the nonconductive state to the conductive state, and voltage VAC is measured by voltage sensor 74. When an AC voltage is not observed, it is considered that the charging cable is not connected to the socket of connector 50. Therefore, the charging operation is not performed and the process proceeds to step S6 where the control moves to the main routine.

On the other hand, when an AC voltage is observed as voltage VAC in step S2, the process proceeds to step S3. In step S3, it is determined whether or not the SOC of main battery B is smaller than threshold value Sth(F) representing the fully charged state.

When SOC of main battery B < Sth(F) is satisfied, it is the state where charging is possible. Accordingly, the process proceeds to step S4. In step S4, control apparatus 60 cooperatively control two inverters and charges main battery B.

In step S3, when SOC of main battery B < Sth(F) is not satisfied, main battery B is in the fully charged state and need not to be charged. Accordingly, the process proceeds to step S5. In step S5, a charging stop process is performed. Specifically, inverters 20 and 30 are stopped and relays RY1, RY2 are opened so that input of AC power to hybrid vehicle 100 is shut off. Then the process proceeds to step S6 where the control returns to the main routine.

### First Variation of First Embodiment

As hybrid vehicle 100 is equipped with engine 4 and motor-generator MG2 as its motive power source, the drive force for the vehicle can be ensured if the fuel of engine 4 is left, even when the SOC of main battery B is low. Accordingly, informing apparatus 102 may be operated when the fuel remaining amount of engine 4 is small.

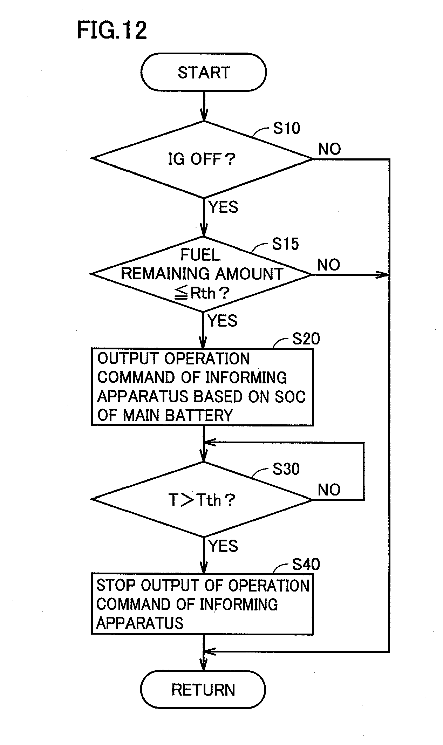

Fig. 12 is another flowchart showing the control of informing apparatus 102 by control apparatus 60 shown in Fig. 1. The process shown in this flowchart is also called from the main routine and executed, at regular time intervals or every time a prescribed condition is satisfied.

Referring to Fig. 12, control apparatus 60 further includes step S15 in the process shown in Fig. 4. That is, when it is determined that the ignition key has been turned to the OFF position in step S10 (YES in step S10), control apparatus 60 determines whether a fuel remaining amount of engine 4 is smaller than a reference value representing lowering of the fuel remaining amount of engine 4 (step S 15). When control apparatus 60 determines that the fuel remaining amount of engine 4 is greater than the reference value (NO in step S15), it ends the series of operations without outputting an operation command of informing apparatus 102.

On the other hand, when control apparatus 60 determines that the fuel remaining amount of engine 4 is not greater than the reference value (YES in step S 15), the process proceeds to step S20, and control apparatus 60 outputs an operation command of informing apparatus 102 to actuator 103 based on the SOC of main battery B.

### Second Variation of First Embodiment

The operation pattern of informing apparatus 102 may be changed based on whether or not the SOC of main battery SOC is smaller than the reference value representing lowering of the SOC of main battery B, so that the vehicle user is more surely informed about lowering of the SOC of main battery B.

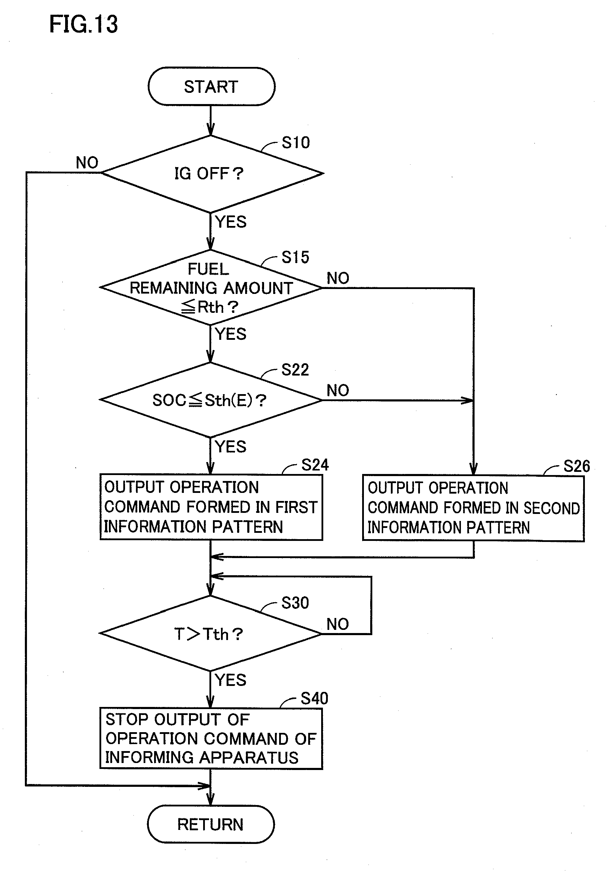

Fig. 13 is another flowchart showing the control of informing apparatus 102 by control apparatus 60 shown in Fig. 1. The process shown in this flowchart is also called from the main routine and executed, at regular time intervals or every time a prescribed condition is satisfied.

Referring to Fig. 13, control apparatus 60 includes steps S22, S24, and S26 in place of step S20 in the process shown in Fig. 12. That is, when it is determined that the fuel remaining amount of engine 4 is not greater than the reference value representing lowering of the fuel remaining amount in step S 15 (YES in step S 15), control apparatus 60 determines whether the SOC of main battery B is smaller than reference value Sth(E) representing lowering of the SOC of main battery B (Step S22). When control apparatus 60 determines that the SOC of main battery B is not greater than the reference value (YES in step S22), it outputs to actuator 103 an operation command of informing apparatus 102 formed in a first information pattern (step S24).

On the other hand, when it is determined that the fuel remaining amount of engine 4 is greater than the reference value representing lowering thereof in step S 15 (NO in step S15), or when it is determined that the SOC of main battery B is greater than the reference value representing lowering thereof in step S22 (NO in step S22), it outputs to actuator 103 an operation command of informing apparatus 102 formed in a second information pattern being different from the first information pattern (step S26).

Exemplary first and second information patterns may be to vibrate informing apparatus 102, with the amplitude of vibration varied between the first and second information patterns. Alternatively, a light emitting apparatus may be provided to informing apparatus 102 and turned on or flashed as the first or second information pattern.

Then, after the operation of step S24 or S26, control apparatus 60 proceeds to step S30.

As above, according to the first embodiment, when the system of the vehicle is stopped, informing apparatus 102 provided at the exterior of the vehicle is operated based on the SOC of main battery B. Thus, the vehicle user after exited from the vehicle can easily recognize at the outside of the vehicle the necessity of charging main battery B. As a result, the vehicle user can effectively be informed about lowering of the SOC of main battery B, and the vehicle user is prevented from forgetting to charge the battery despite the lowered SOC of the battery.

### Second Embodiment

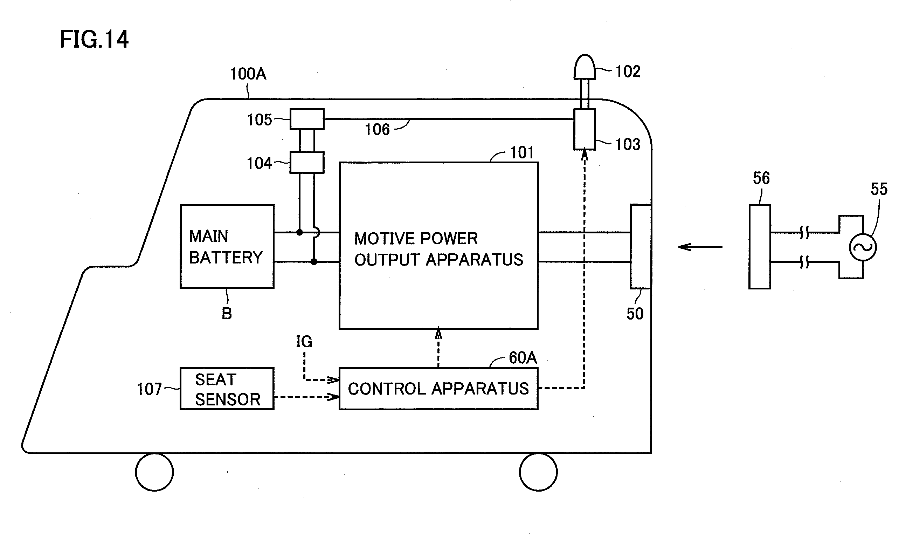

Fig. 14 is a schematic block diagram of a hybrid vehicle shown as one exemplary electric-powered vehicle according to a second embodiment of the present invention. Referring to Fig. 14, hybrid vehicle 100A further includes a seat sensor 107, and a control apparatus 60A in place of control apparatus 60, in the configuration of hybrid vehicle 100 in the first embodiment shown in Fig. 1.

Seat sensor 107 senses whether or not the driver is seated in the driver's seat. Seat sensor 107 outputs a signal of H level to control apparatus 60A when the driver is seated in the driver's seat, and outputs a signal ofL level to control apparatus 60A when the driver is not seated in the driver's seat. As seat sensor 107, a load sensor disposed in the seat or an optical sensor optically sensing whether the driver is seated may be used.

Control apparatus 60A receives signal IG from the ignition key, and receives a detection signal from seat sensor 107. When control apparatus 60A determines, based on the signal IG, that the ignition key has been turned to the OFF position, it determines, based on the signal from seat sensor 107, whether or not the driver has exited from the vehicle, by the method described later. When control apparatus 60A determines that the driver has exited from the vehicle, it outputs an operation command of informing apparatus 102 to actuator 103.

The rest of the configuration of control apparatus 60A is the same as control apparatus 60 in the first embodiment.

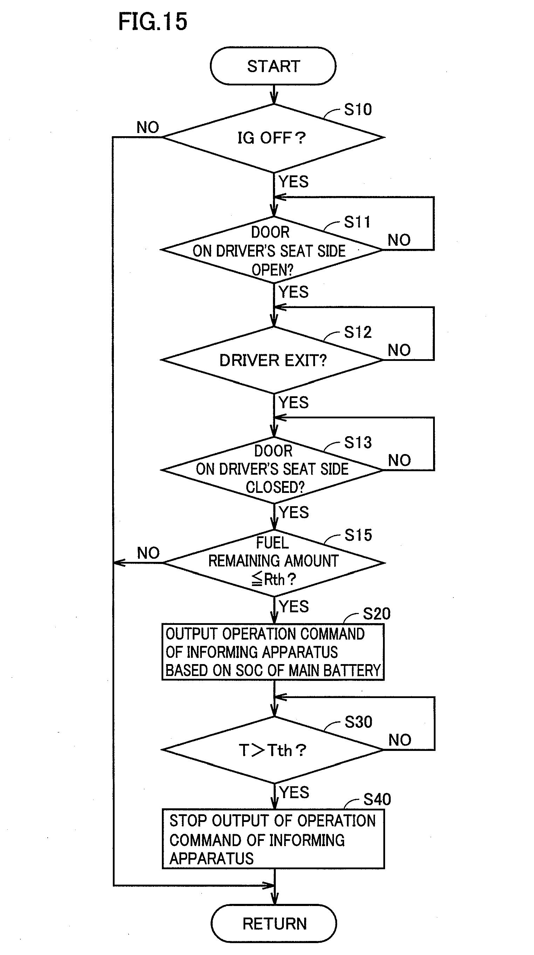

Fig. 15 is a flowchart showing the control of informing apparatus 102 by control apparatus 60A shown in Fig. 14. The process shown in this flowchart is called from the main routine and executed, at regular time intervals or every time a prescribed condition is satisfied.

Referring to Fig. 15, control apparatus 60A further includes steps S 11-S13 in the process shown in Fig. 12. That is, when it is determined that the ignition key has been turned to the OFF position in step S10 (YES in step S10), control apparatus 60A determines whether or not the door at the driver's seat has been opened (step S11). The opening and closing of the door at the driver's seat is detected by a not-shown opening/closing sensor.

When control apparatus 60A determines that the door at the driver's seat has been opened (YES in step S 11), it detects, based on the signal from seat sensor 107, whether or not the driver has left the seat, and determines whether or not the driver has exited from the vehicle (step S12). Specifically, control apparatus 60A determines that the driver has exited from the vehicle if the signal from seat sensor 107 is L level.

Thereafter, control apparatus 60A determines whether or not the door at the driver's seat has been closed (step S13). When control apparatus 60A determines that the door at the driver's seat has been closed (YES in step S13), the process proceeds to step S20.

While the foregoing description has been given based on the process shown in Fig. 12, the control can be based on the process shown in Fig. 4. That is, step S 15 may not necessarily be included in the process shown in Fig. 15.

As above, according to the second embodiment, exiting of the driver from the vehicle is determined. Therefore, the vehicle user can more surely be informed about lowering of the SOC of main battery B.

### Third Embodiment

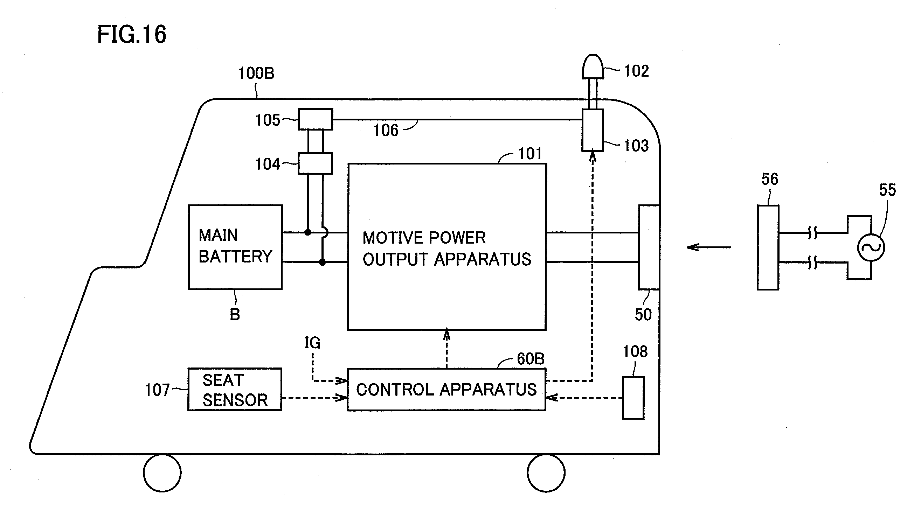

Fig. 16 is a schematic block diagram of a hybrid vehicle shown as one exemplary electric-powered vehicle according to a third embodiment of the present invention. Referring to Fig. 16, hybrid vehicle 100B further includes a vehicle position detecting apparatus 108, and a control apparatus 60B in place of control apparatus 60A, in the configuration of hybrid vehicle 100A in the second embodiment shown in Fig. 14.

Vehicle position detecting apparatus 108 detects whether or not hybrid vehicle 100B is parked at the location where charging equipment is installed. Vehicle position detecting apparatus 108 may be, for example, a car navigation apparatus. Alternatively, it may sense that the vehicle is parked at the location where charging equipment is installed based on the communication with a radio apparatus (not shown) provided at the location where the charging equipment is installed.

When vehicle position detecting apparatus 108 detects that the vehicle is parked at the location where charging equipment is installed, it outputs a signal of H level to control apparatus 60B.

Control apparatus 60B receives signal IG from the ignition key, and receives a detection signal from seat sensor 107. Control apparatus 60B also receives a detection signal from vehicle position detecting apparatus 108. When control apparatus 60B determines, based on signal IG, that ignition key has been turned to the OFF position, it determines, based on the signal from seat sensor 107, whether the driver has exited from the vehicle. When control apparatus 60B determines that the driver has exited from the vehicle, it outputs, only when the signal received from vehicle position detecting apparatus 108 is H level, an operation command of informing apparatus 102 to actuator 103.

As above, according to the third embodiment, informing apparatus 102 is operated only when vehicle position detecting apparatus 108 detects that hybrid vehicle 100B is parked at the location where charging equipment is installed. Therefore, informing apparatus 102 will not unnecessarily operate at the location with no charging equipment where charging cannot be performed. Thus, unnecessary power consumption can be prevented.

### Fourth Embodiment

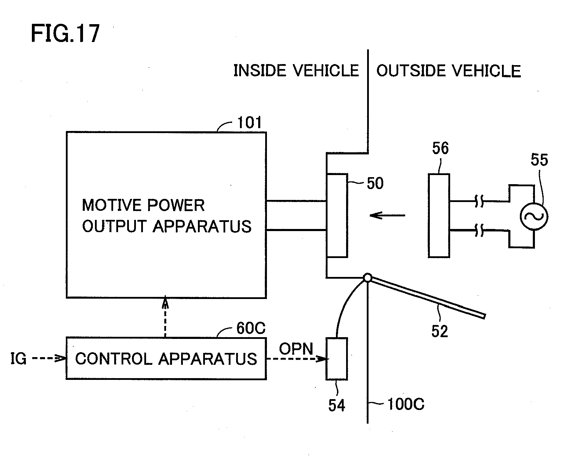

Fig. 17 is a schematic block diagram of a hybrid vehicle shown as one exemplary electric-powered vehicle according to a fourth embodiment of the present invention. Referring to Fig. 17, hybrid vehicle 100C is not provided with informing apparatus 102 and actuator 103, but further provided with a charging lid 52 and a charging lid opener motor 54, as well as a control apparatus 60C in place of control apparatus 60, in the configuration of hybrid vehicle 100 in the first embodiment shown in Fig. 1. In Fig. 17, main battery B, DC/DC converter 104 and auxiliary equipment battery 105 are not shown.

Charging lid 52 is a lid for closing an opening where connector 50 is accommodated. Charging lid 52 is opened and closed by charging lid opener motor 54. Charging lid opener motor 54 is a small electric motor, and when it receives an open command OPN from control apparatus 60C, it opens charging lid 52.

Control apparatus 60C receives signal IG from the ignition key. When control apparatus 60C determines, based on received signal IG, that the ignition key has been turned to the OFF position, it determines, based on the SOC of the main battery, whether or not to open charging lid 52. Specifically, control apparatus 60C determines whether or not the SOC of main battery B is smaller than the reference value representing lowering of the SOC of main battery B. When the SOC of main battery B is not greater than the reference value, it determines to open charging lid 52. When control apparatus 60C determines to open charging lid 52, it outputs an open command OPN to charging lid opener motor 54.

Control apparatus 60C may output open command OPN to charging lid opener motor 54 if the SOC of main battery B is not greater than the reference value thereof when the fuel remaining amount of engine 4 is smaller than the reference value representing lowering of the fuel remaining amount of engine 4.

While it has been described that charging lid 52 is electrically operated by charging lid opener motor 54 to open and close, the actuator of charging lid 52 is not limited to such a configuration. For example, a resilient member biasing charging lid 52 in the opening direction and a lock mechanism for maintaining charging lid 52 in the closed state may be provided as an actuator, and lock by the lock mechanism may be released in response to open command OPN from control apparatus 60.

As above, according to the fourth embodiment, charging lid 52 is forcibly opened based on the SOC of main battery B when the system of the vehicle is stopped. Therefore, the vehicle user can easily recognize at the outside of the vehicle the necessity of charging main battery B after exiting the vehicle.

While it has been described in the first to fourth embodiments that information apparatus 102 changes its position based on the SOC of main battery B, a light emitting apparatus may be provided to informing apparatus 102 to be turned on or flashed in order to more positively attract the attention of the vehicle user. Providing such a light emitting apparatus, the vehicle user's attention can more positively be attracted even in the night. Also, a sound source may be provided to informing apparatus 102 for emitting informing sound.

While it has been described that informing apparatus 102 and charging lid 52 operate based on the SOC of main battery B, a distance that the vehicle can travel may be calculated from the SOC of main battery B, and informing apparatus 102 and charging lid 52 may operate based thereon. Furthermore, the distance that the vehicle can travel may be calculated from the SOC of main battery B and the fuel remaining amount of engine 4, and informing apparatus 102 and charging lid 52 may operate based thereon.

While it has been described that AC power from commercial power supply 55 is provided across neutral points N1, N2 of motor-generators MG1, MG2, and main battery B is charged using each phase coil of motor-generators MG1, MG2 and inverters 20, 30, the present invention is also applicable to a hybrid vehicle provided with a separate external charging apparatus (AC/DC converter) in its interior or at its exterior. On the other hand, provision of the separate external charging apparatus is not necessary according to each embodiment above, and therefore reduction in costs and weight of the vehicle can be attained.

In the foregoing, motor-generator MG2 corresponds to "a first motive power apparatus" and "a first rotating electric machine" in the present invention, and main battery B corresponds to "an electric power storage apparatus" in the present invention. A pair of informing apparatus 102 and actuator 103, and a pair of charging lid 52 and charging lid opener motor 54 each constitute "an informing portion" in the present invention, and control apparatus 60 corresponds to "a control portion" in the present invention. The process of steps S11-S13 executed by control apparatus 60A in the second embodiment corresponds to the process executed by "an exit determination portion" in the present invention, and vehicle position detecting apparatus 108 corresponds to "a vehicle position detection portion" in the present invention. Engine 4 corresponds to "a second motive power apparatus" and "an internal combustion engine" in the present invention, and motor-generator MG1 and inverter 20 constitute "an electric power generation apparatus" in the present invention. Connector 50 corresponds to "an electric power input portion" in the present invention, and motor-generator MG1 corresponds to "a second rotating electric machine" in the present invention. Inverters 20, 30 respectively correspond to "a second inverter" and "a first inverter" in the present invention, and first and second inverter control portions 62, 63 and AC input control portion 64 constitute "an inverter control portion" in the present invention.

It should be understood that the embodiments disclosed herein are illustrative and non-restrictive in every respect. The scope of the present invention is defined by the claims, rather than the description of the embodiments above, and is intended to include any modifications within the meaning and scope equivalent to the terms of the claims.

## Claims

1. An electric-powered vehicle, comprising:
a first motive power apparatus of which energy source is electric power;
an electric power storage apparatus supplying electric power to said first motive power apparatus;
information means provided at the exterior of the vehicle for informing a vehicle user about necessity of charging said electric power storage apparatus; and
control means for outputting an operation command to said information means based on a state of charge of said electric power storage apparatus, when a system of the vehicle is stopped.

2. An electric-powered vehicle, comprising:
a first motive power apparatus of which energy source is electric power;
an electric power storage apparatus supplying electric power to said first motive power apparatus;
information means provided at the exterior of the vehicle;
exit determination means for determining whether or not a driver has exited from the vehicle; and
control means for outputting an operation command to said information means based on a state of charge of said electric power storage apparatus, when a system of the vehicle is stopped and said exit determination means determines that the driver has exited from the vehicle.

3. The electric-powered vehicle according to claim 1 or 2, wherein
said information means is configured to change its position in accordance with said operation command from said control means, and
said control means outputs to said information means the operation command that varies in accordance with the state of charge of said electric power storage apparatus.

4. The electric-powered vehicle according to claim 1 or 2, wherein
when the state of charge of said electric power storage apparatus becomes not greater than a prescribed value, said control means outputs to said information means the operation command that is different than when the state of charge of said electric power storage apparatus is greater than said prescribed value, and
said information means informs said vehicle user by an information pattern that is different between when the state of charge of said electric power storage apparatus is not greater than said prescribed value and when it is greater than said prescribed value, based on the operation command from said control means.

5. The electric-powered vehicle according to claim 1 or 2, wherein
said control means outputs said operation command to said information means, when the state of charge of said electric power storage apparatus becomes not greater than a prescribed value.

6. The electric-powered vehicle according to claim 1 or 2, further comprising
vehicle position detection means for detecting whether or not said electric-powered vehicle is parked at a location where charging equipment is installed, wherein
said control means outputs said operation command to said information means, when said vehicle position detection means detects that the electric-powered vehicle is parked at the location where said charging equipment is installed.

7. The electric-powered vehicle according to claim 1 or 2, further comprising
a second motive power apparatus of which energy source is fuel, wherein
said control means outputs said operation command to said information means based on the state of charge of said electric power storage apparatus and a remaining amount of said fuel.

8. The electric-powered vehicle according to claim 7, wherein
said information means is configured to change its position in accordance with said operation command from said control means, and
said control means outputs to said information means an operation command that varies in accordance with the state of charge of said electric power storage apparatus and the remaining amount of said fuel.

9. The electric-powered vehicle according to claim 7, wherein
when the state of charge of said electric power storage apparatus becomes not greater than a first prescribed value and the remaining amount of said fuel becomes not greater than a second prescribed value, said control means outputs to said information means the operation command that is different than when at least one of the state of charge of said electric power storage apparatus and the remaining amount of said fuel is greater than the respective corresponding first and second prescribed values, and
said information means informs said vehicle user by an information pattern that is different between when the state of charge of said electric power storage apparatus is not greater than said first prescribed value with the remaining amount of said fuel being not greater than said second prescribed value, and when at least one of the state of charge of said electric power storage apparatus and the remaining amount of said fuel is greater than the respective corresponding first and second prescribed values, based on the operation command from said control means.

10. The electric-powered vehicle according to claim 7, wherein
said control means outputs said operation command to said information means, when the state of charge of said electric power storage apparatus becomes not greater than a third prescribed value and the remaining amount of said fuel becomes not greater than a fourth prescribed value.

11. The electric-powered vehicle according to claim 7, further comprising
vehicle position detection means for detecting whether or not said electric-powered vehicle is parked at a location where charging equipment is installed, wherein
said control means outputs said operation command to said information means, if the remaining amount of said fuel is not greater than a fifth prescribed value when said vehicle position detection means detects that the electric-powered vehicle is parked at the location where said charging equipment is installed.

12. The electric-powered vehicle according to claim 7, further comprising:
an electric power generation apparatus generating electric power using an output from said second motive power apparatus; and
an electric power input portion receiving electric power provided from a source outside the vehicle for charging said electric power storage apparatus, wherein
said first motive power apparatus includes a first rotating electric machine,
said second motive power apparatus includes an internal combustion engine, and
said electric power generation apparatus includes a second rotating electric machine having its rotation shaft mechanically linked to a crankshaft of said internal combustion engine,
said electric-powered vehicle further comprising:
first and second inverters provided respectively corresponding to said first and second rotating electric machines; and
inverter control means for controlling said first and second inverters, wherein
said first and second rotating electric machines respectively include first and second three-phase coils as stator coils,
said electric power input portion includes
a first terminal connected to a neutral point of said first three-phase coil, and
a second terminal connected to a neutral point of said second three-phase coil, and wherein
said inverter control means controls said first and second inverters so that AC power provided across said first and second terminals is converted into DC power and provided to said electric power storage apparatus.

13. A method of controlling an electric-powered vehicle, said electric-powered vehicle including:
a first motive power apparatus of which energy source is electric power;
an electric power storage apparatus supplying electric power to said first motive power apparatus; and
an information portion provided at the exterior of the vehicle for informing a vehicle user about necessity of charging said electric power storage apparatus, said method comprising:
a first step of determining whether or not a system of said vehicle is stopped; and
a second step of outputting an operation command to said information portion based on a state of charge of said electric power storage apparatus, when it is determined that said system is stopped.

14. A method of controlling an electric-powered vehicle, said electric-powered vehicle including:
a first motive power apparatus of which energy source is electric power;
an electric power storage apparatus supplying electric power to said first motive power apparatus; and
an information portion provided at the exterior of the vehicle, the method comprising:
a first step of determining whether or not a system of said vehicle is stopped;
a second step of determining whether or not a driver has exited from the vehicle; and
a third step of outputting an operation command to said information portion based on a state of charge of said electric power storage apparatus, when it is determined that said system is stopped and that the driver has exited from the vehicle.
